# EUROPÄISCHE PATENTSCHRIFT

(11) **EP 2 163 298 B1**
(45) Veröffentlichungstag und Bekanntmachung des Hinweises auf die Patenterteilung: **12.10.2011**
(21) Anmeldenummer: 09009363.4
(22) Anmeldetag: 18.07.2009
(51) Int. Cl.: B01J 3/00, G02B 7/00, B29C 35/06

(54) **Fensteranordnung an einem Druckrohr**
Window attachment to a pressure tube
Agencement de fenêtre sur un tube de pression

(30) Priorität: 21.08.2008 DE 102008039024
(43) Veröffentlichungstag der Anmeldung: 17.03.2010
(73) Patentinhaber: SIKORA AG, 28307 Bremen (DE)
(72) Erfinder: Sikora, Harald, 28357 Bremen (DE); Seidel, Ralf, 27321 Morsum (DE)
(74) Vertreter: Mönkemeyer, Philipp

(56) Entgegenhaltungen:
- EP-A1- 0 571 960
- EP-A2- 0 387 508
- DD-A1- 224 671
- DE-A1- 3 737 808
- GB-A- 1 349 245
- GB-A- 2 127 174
- US-A- 2 357 753
- US-A- 3 321 265
- DATABASE WPI Week 197435 Thomson Scientific, London, GB; AN 1974-H4271V XP002605757, & SU 405 061 A (GEOCHEM PHYS MINER UKR R) 22. Oktober 1973 (1973-10-22)

## Beschreibung

Die Erfindung bezieht sich auf eine Fensteranordnung an einem Druckrohr, vorzugsweise zum Vulkanisieren oder Vernetzen von Umhüllungen von elektrischen Kabeln nach dem Oberbegriff des

Patentanspruchs 1.

Bei der Herstellung von Kabeln wird der Kabelmantel mit Hilfe eines Extruders auf die Kabelseele extrudiert. Durch Vernetzung des aus Kunststoff bestehenden Kabelmantels wird die plastische Masse elastisch gemacht. Die Vernetzung bzw. Vulkanisation des Kunststoffs findet in einem Druckrohr statt, in dem relativ hohe Temperaturen und ein erheblicher Überdruck herrschen, z.B. Temperaturen bis zu 550°C und Drücke bis zu 30 bar.

Es ist bekannt, den Durchmesser einer Kabelummantelung und/oder die Dicke von einzelnen Schichten der Kabelummantelung mit Hilfe einer Röntgenmessvorrichtung zu bestimmen. Die Röntgenmessvorrichtung weist eine Röntgenstrahlungsquelle und einen röntgenstrahlungsempfindlichen Empfänger auf. Letzerer ist z.B. aus einzelnen röntgenstrahlungsempfindlichen Elementen aufgebaut, die seriell abgetastet werden.

Soll eine Wanddicken- und/oder Durchmesserbestimmung eines Kabels während seines Durchlaufes im Druckrohr bestimmt werden, ist die Röntgenmessvorrichtung im Zuge des Druckrohrs anzuordnen. Es ist bekannt, hierzu separate Gehäuse zu verwenden, die zu diametral gegenüberliegenden Durchgängen im Druckrohr ausgerichtet sind, durch welche sich die Messebene der Röntgenmessvorrichtung senkrecht zur Längsachse des Druckrohrs erstreckt. Die Durchgänge werden von einer Fensterplatte dicht verschlossen, die für Röntgenstrahlung gut durchlässig ist.

Es ist bekannt, dünne Fensterplatten aus Beryllium vorzusehen. Beryllium hat von den Metallen bei gleichen Festigkeitskennwerten die geringste Absorption von Röntgenstrahlung. Die Berylliumplatten werden zusammen mit einer Flachdichtung gegen einen Absatz im Durchgang festgelegt, und zwar von einem Vorsprung eines sogenannten T-Flansches, der außen am Gehäuse durch Verschraubung befestigt ist. Mit Hilfe des T-Flansches wird die Berylliumplatte über die Dichtung unter hohem Druck an eine Durchgangsschulter angepresst.

Beryllium gilt als hoch toxisch, und Berylliumstaub ist krebserregend. Aus diesem Grunde und zur Verbesserung der Korrosionsbeständigkeit der Berylliumplatten werden diese z.B. mit einer keramischen Schicht belegt. Während des Betriebs im Druckrohr sammelt sich Kondensat im unteren Bereich des Berylliumfensters und bewirkt mit schwefel- und chlorhaltigen Bestandteilen eine Korrosion des Berylliums. Krebserregende Berylliumpartikel können in den Bedienungsbereich gelangen, wenn Berylliumplatten durch Korrosionsdruck durchlässig werden und dadurch in die Umgebungsluft geschleudert werden. Keramische und auch metallische Beschichtungen der Berylliumplatte zur Korrosionsvermeidung haben sich aufgrund zu geringer Schichtdichten nur als bedingt wirksam erwiesen.

Es ist auch bekannt, zu Korrosionsschutzzwecken eine Schutzfolie vor der Berylliumplatte anzuordnen. Diese kann ebenso wie eine Beschichtung bei der Entfernung von festen Rückständen, die sich auf der Berylliumplatte niedergeschlagen haben, beschädigt werden.

Schließlich ist bei der herkömmlichen Anordnung von Berylliumplatten nach erfolgter Montage eine aufwendige Überprüfung der Lage der Dichtungen erforderlich, besonders um ein Leck zu vermeiden, weil in solchen Fällen Beryllium-Staubpartikel in die Umgebungsluft gelangen.

Der Erfindung liegt die Aufgabe zugrunde, eine Fensteranordnung an einem Druckrohr, vorzugsweise zum Vulkanisieren oder Vernetzen von Umhüllungen von elektrischen Kabeln, zu schaffen, welche weniger anfällig für Korrosion ist und einen Abfluss des Kondensats ermöglicht.

Diese Aufgabe wird durch die Merkmale des Patentanspruchs 1 gelöst.

Die Erfindung sorgt für eine Kondensation der Gasatmosphäre an der Fensterplatte. Diese ist so angeordnet, dass das Kondensat ungehindert abfließen kann und dabei Schmutzpartikel mitreißt. Das schmutzbehaftete Kondensat fließt in das Druckrohr. Dieser Selbstreinigungseffekt reduziert die Korrosion der Fensterplatte und erhöht deren Standzeit.

Bei der erfindungsgemäßen Fensteranordnung ist die Fensterplatte vorzugsweise aus keramischem Werkstoff geformt. Keramischer Werkstoff ist bekanntlich korrosionsbeständig. Außerdem ist Keramik physiologisch unbedenklich. Eine zusätzliche Beschichtung als Korrosionsschutz entfällt. Feste Ablagerungen können von einer Fensterplatte aus Keramik leicht entfernt werden, ohne die Fensterplatte in ihrer Funktion zu beinträchtigen.

Keramik hat zwar eine geringere Transmissionsfähigkeit für Röntgenstrahlung als Beryllium, die höhere Dämpfung kann jedoch durch eine Anhebung des Röntgenstroms oder der Röntgenenergie kompensiert werden.

Alternativ können auch Titan, Kunststoff, kohlefaserverstärkter Kunststoff oder eine Kombination dieser Materialien verwendet werden. Besonders bevorzugt ist PEEK (Polyetheretherketon). Kunststoffe vertragen relativ hohe Temperaturen, z. B. 250°C, sind dann aber nicht mehr druckbeständig. Eine erfindungsgemäße Ausgestaltung sieht daher vor, den Kunststoff mit einer Metallfolie, vorzugsweise Titanfolie, auf der Innenseite zu beschichten .

Durch die Beschichtung werden eine verbesserte Wärmeableitung, eine Reflexion der Wärmestrahlung aus dem heißen Schutzgas (bis 400° C) und wegen der blanken Oberfläche eine Selbstreinigungsgewährleistung erzielt. Wegen seiner glatten Oberfläche lässt sich das Fenster leichter reinigen. Das erfindungsgemäße Fenster ist ungiftig, mechanisch stabil und chemisch beständig. Die genannten Eigenschaften führen zu einer langen Standzeit.

Nach einer Ausgestaltung der Erfindung liegt die Fensterplatte auf der drucklosen Seite gegen eine Ringdichtung, zum Beispiel einen O-Ring, an. Die Anbringung der Fensterplatte kann derart sein, dass diese mit einer gewissen Vorspannung gegen die Dichtung anliegt. Mit wachsendem Druck im Druckrohr wird die Fensterplatte stärker gegen den Dichtring angelegt. Diese Maßnahme erlaubt eine gleichmäßige Verteilung der Kräfte, die auf die Fensterplatte und die Dichtung wirken. Eine Fensterplatte aus sprödem Material, wie zum Beispiel Keramik, wird daher nicht unzulässig belastet.

Nach einer anderen Ausgestaltung der Erfindung wird die Fensterplatte von seitlichen Halterungen gehalten, welche nach einer weiteren Ausgestaltung der Erfindung von länglichen Klammern gebildet werden können, die ihrerseits durch die Seitenwände des Durchgangs bzw. des Druckrohrs fixiert sind. Die Klammern sind vorzugsweise U-förmig und legen sich mit einem Schenkel gegen die Druckrohrseite der Fensterplatte an, und mit dem anderen Schenkel greifen sie in eine druckrohrfeste Ausnehmung ein, um die Fixierung der Fensterplatte zu bewerkstelligen. Die Schenkel erstrecken sich dabei annähernd über die Länge der Fensterplatte und bedecken einen Teil ihrer Fläche. Der zwischen den Schenkeln liegende Flächenabschnitt ist jedoch ausreichend groß, um den Durchtritt von Röntgenstrahlung zu ermöglichen.

Die Anbringung der Fensterplatte ist darüber hinaus derart, dass an der Fensterplatte abfließendes Kondensat im Bereich der Halterung an dieser vorbeifließen kann zurück in das Druckrohr, ohne dass es sich an einer bestimmten Stelle ansammelt und die Fensterplatte beeinträchtigt.

Um die Wärmebeeiriträchtigung des Fensters, insbesondere im Bereich des unteren Fensters zu reduzieren und insbesondere die Kondensation zu erleichtern, sieht eine Ausgestaltung der Erfindung vor, dass der Fensteranordnung mindestens ein Kühlkanal zugeordnet ist für den Durchfluss von Kühlmittel, z.B. Wasser. Wenn ein sogenannter T-Flansch verwendet wird, gegen den die Fensterplatte anliegt, ist es vorteilhaft, diesen von einem ringförmigen Körper zu umgeben, in dem ein Kühlkanal geformt ist.

Ein Ausführungsbeispiel der Erfindung wird nachfolgend anhand von Zeichnungen näher erläutert.
- Fig. 1: zeigt einen Abschnitt eines Druckrohrs zur Herstellung von elektrischen Kabeln mit einer Fensteranordnung nach der Erfindung.
- Fig. 2: zeigt einen Schnitt durch die Anordnung nach Fig. 1 entlang der Linie 2-2.
- Fig. 3: zeigt einen Schnitt durch die Anordnung nach Fig. 2 entlang der Linie 3-3.
- Fig. 4: zeigt eine Ansicht gemäß Pfeil 4 der Darstellung nach Fig. 2.
- Fig. 5: zeigt die Ansicht 5 der Darstellung nach Fig. 2,
- Fig. 6: zeigt vergrößert einen Teil der Einzelheit 6 nach Fig. 3.
- Fig. 7: zeigt vergrößert die Einzelheit 6 nach Fig. 3.
- Fig. 8: zeigt einen Schnitt ähnlich Fig. 6 oder 7, jedoch nach dem Stand der Technik.
- Fig. 9: zeigt vergrößert die Einzelheit 9 nach Fig. 3.
- Fig. 10: zeigt einen Schnitt durch eine Fensterplatte für die gezeigten Fenster- anordnungen.
- Fig. 11: zeigt einen Schnitt durch eine abgewandelte Ausführungsform einer unteren Fensteranordnung.

In den Figuren ist ein Abschnitt 10 eines Druckrohrs, zum Beispiel zum Vernetzen von Umhüllungen von elektrischen Kabeln 13, dargestellt. Der Druckrohrabschnitt 10 kann jedoch auch als selbständiger Abschnitt vorgesehen werden, der in den Zug des relativ langen Druckrohrs eingeflanscht ist.

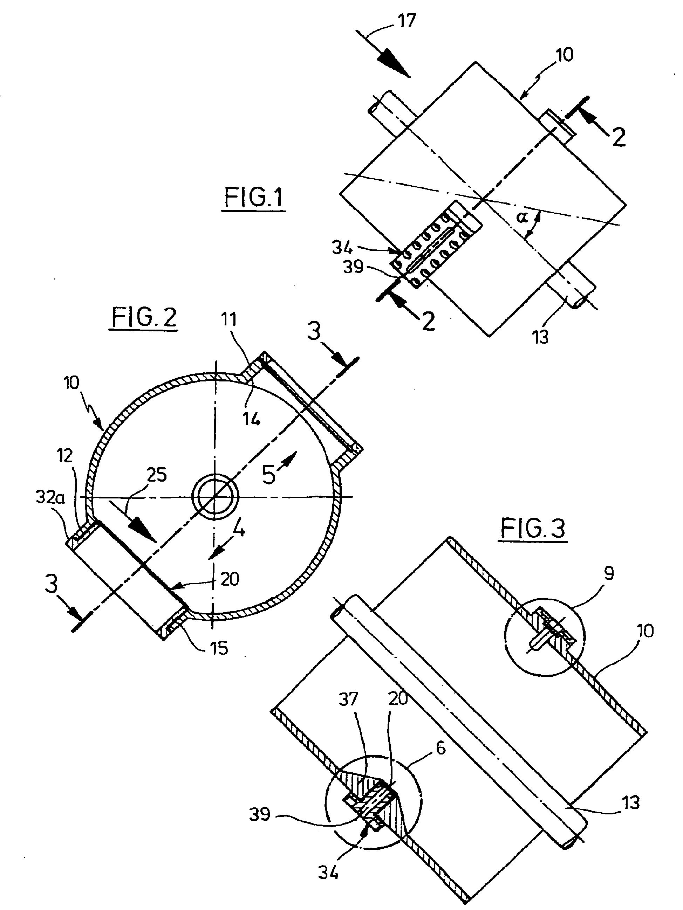

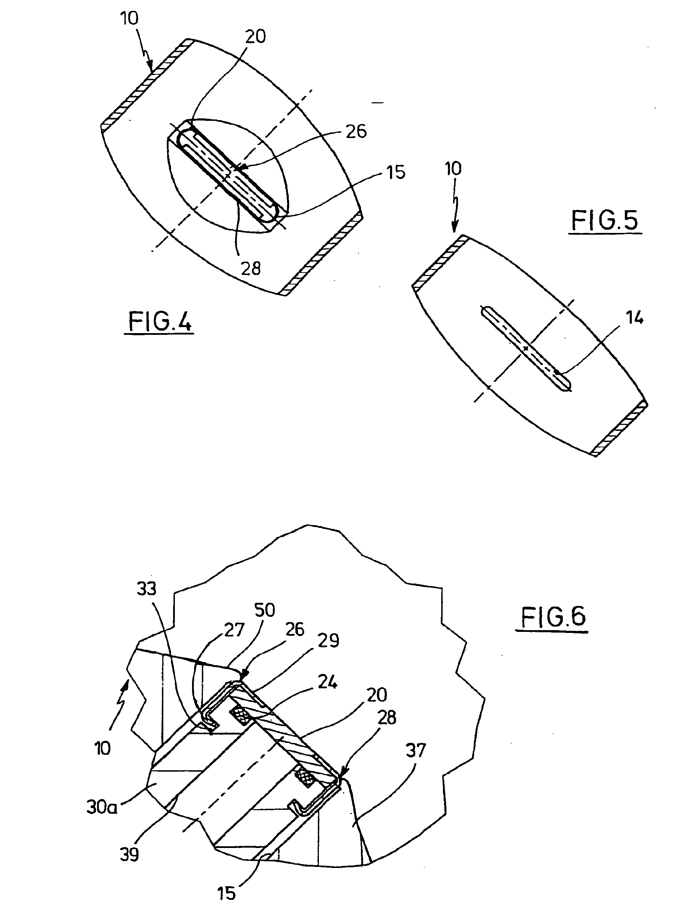

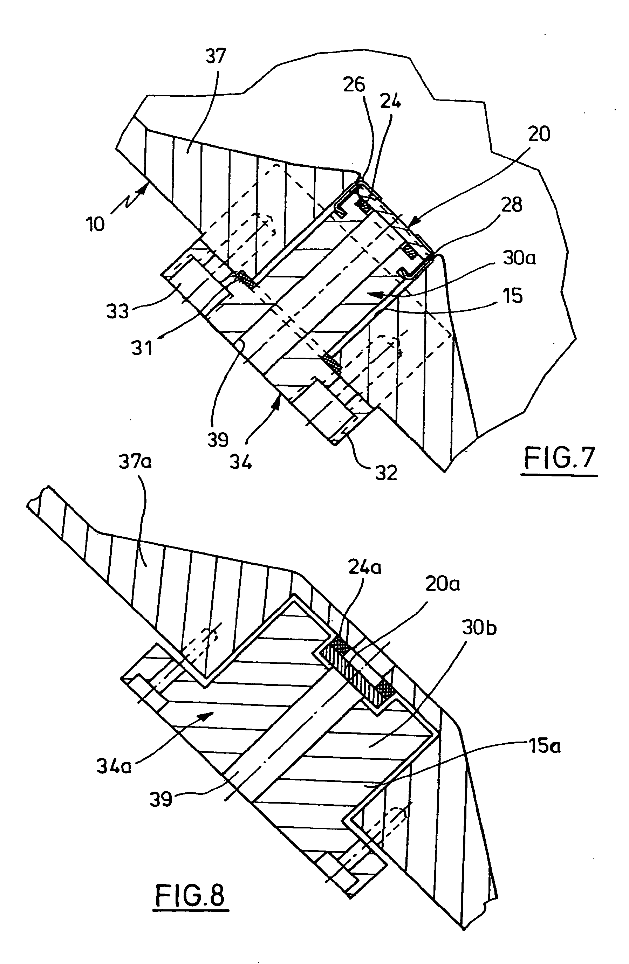

Der Druckrohrabschnitt 10 weist diametral gegenüberliegend radial nach außen gerichtete Flansche 11 bzw. 12 auf, welche einen im Querschnitt annähernd schlitzförmigen Durchgang 14 bzw. 15 bilden. Die Ausbildung der Flansche 11, 12 bzw. die weiteren Teile, die den Durchgängen 14 bzw. 15 zugeordnet sind, gehen deutlicher aus den Figuren 6 und 7 hervor. In Fig. 7 ist ein Flanschkörper 34 zu erkennen mit einem äußeren Flansch 32, der mit Hilfe von Schrauben 33 außen gegen die Wandung des Druckrohrabschnitts 10 verschraubt ist. Der Druckrohrabschnitt 10 ist, wie insbesondere in Fig. 3 zu erkennen, in diesem Bereich durch eine Verdickung 37 nach innen verstärkt. Wenn vor und nachstehend "innen" und "außen" erwähnt wird, bezieht sich dies auf das Druckrohr, d.h. auf sein Inneres bzw. Äußeres. Der Flanschkörper 34 weist einen Hülsenabschnitt 30a auf, der in den Durchgang 15 eingeführt ist. Der Umfang des senkrecht zur Zeichenebene länglichen Hülsenabschnitts 30a ist entsprechend dem Querschnitt des Durchgangs 15 geformt und länglich, wobei zwischen der Außenseite des Hülsenabschnitts 30a und der Wandung des Durchgangs 15 ein Spalt freigelassen ist. Zwischen dem Flansch 32 und der Außenseite des Druckrohrs 10 ist eine Dichtung 31 eingefügt.

Flansch 32 mit Hülsenabschnitt 30a bilden eine durchgehende im Querschnitt schlitzförmige Passage 39.

Gegen das freie Ende des Hülsenabschnitts 30a ist eine Fensterplatte 20 aus Keramik oder Kunststoff gelegt. In einer Ringausnehmung an der Stirnseite des Hülsenabschnitts 30a ist ein O-Ring 24 eingelassen, der im entspannten Zustand etwas über die Stirseite des Hülsenabschnitts 30a übersteht. Die Fensterplatte 20 wird mit Hilfe von zwei länglichen, im Querschnitt U-förmigen Klammern 26, 28 gegen das freie Ende des Hülsenabschnitts 30a angedrückt und an diesem an Ort und Stelle gehalten, wobei der O-Ring 24 unter geringe Vorspannung gesetzt ist. Der eine innere Schenkel 29 der Klammern 26, 28 liegt in Fig. 6 versenkt in einer entsprechenden Ausnehmung der Fensterplatte 20. Der Schenkel 29 ist daher bündig mit der Außenseite der Fensterplatte 20, welche dem Inneren des Druckrohrs 10 zugekehrt ist. Der andere Schenkel 27 greift in eine Ausnehmung 33 an der Außenseite des Hülsenabschnitts 30a, um die Fensterplatte 20 festzulegen. Der Schenkel 27 ist etwas in Richtung des anderen Schenkels 29 gebogen, um ein Drehmoment in Richtung Fensterplatte 20 zu bewirken. Der Steg der U-Klammern 26, 28 erstreckt sich im Spalt zwischen der Wandung des Durchgangs 15 und der Außenseite des Hülsenabschnitts 30a.

Sich im Druckrohr 10 bildendes Kondensat kann, wie in Fig. 1 durch Pfeil 17 angedeutet fließen. Das Druckrohr hat ein Gefälle α (Fig. 1). Außerdem fließt es gemäß Pfeil 25 in Fig. 2. Dies ist bedingt durch die Schräganordnung der Fensterplatte 20 (Fig. 2 oder 6). In den Figuren 6 und 7 ist daher zu erkennen, dass sich an der Fensterplatte 20 absetzendes Kondensat von links nach rechts abfließen kann, ohne durch Vorkehrungen der Befestigung der Fensterplatte 20 gehindert zu sein. Das Kondensat fließt unmittelbar in das Innere des Druckrohrs 10 zurück.

Es ist denkbar, geeignete Kühlvorkehrungen vorzusehen, damit die Temperatur einer Fensterplatte 20 stets unter dem Taupunkt der Gasatmosphäre im Druckrohr 10 liegt. Derartige kühlvorkohrungen sind an sich bekannt (DE-A-37 37 808).

In Fig. 4 ist gut die Form der Fensterplatte 20 und die Ausdehnung der Schenkel 29 der Federn 26, 28 zu erkennen. Die Federn sind aus einem geeigneten federnden Flachmaterial geformt. Die Schenkel 29 erstrecken sich über einen großen Teil der Länge der Fensterplatte 20, haben jedoch zwischen sich einen ausreichenden Abstand, um den Durchgang von Röntgenstrahlung zu gewährleisten. Hierzu ist anzumerken, dass den Flanschen 11, 12 geeignete Vorkehrungen zugeordnet werden für die Durchstrahlung des Inneren des Druckrohrs 10 mit einer Röntgenstrahlung und zum Empfang der Röntgenstrahlung mit einer geeigneten Röntgenempfangsvorrichtung (nicht gezeigt). Diese Röntgenanordnung dient, wie an sich bekannt, zur Vermessung der Ummantelung von elektrischen Kabeln, welche im Druckrohrvernetzt werden. Dies ist jedoch im Einzelnen nicht dargestellt.

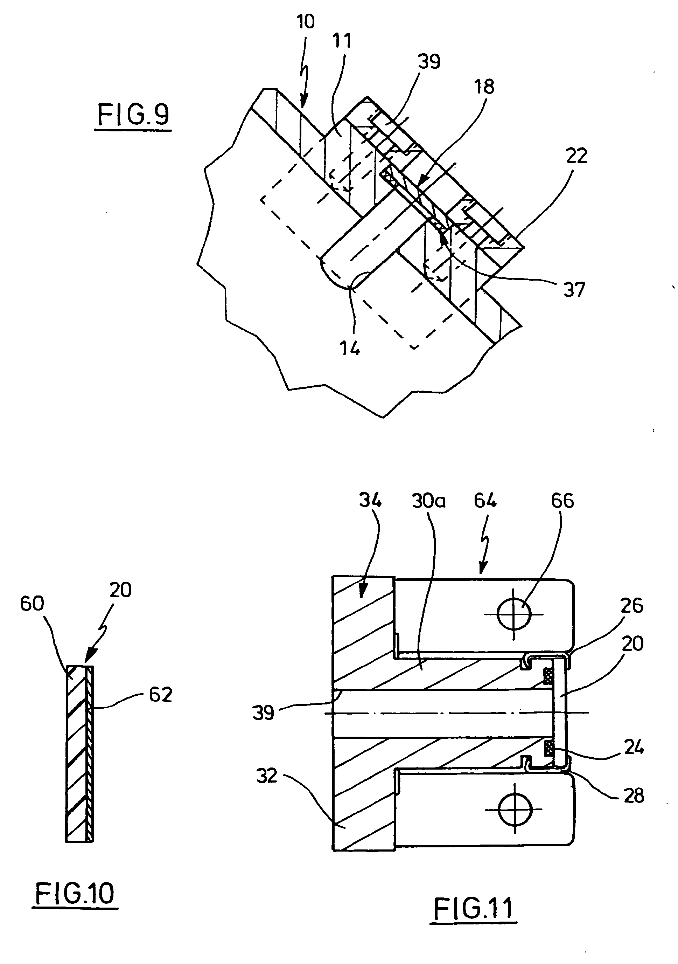

In Fig. 9 ist die Einzelheit 9 nach Fig. 3 dargestellt. Man erkennt eine Fensterplatte 18 nach dem Stand der Technik, die in eine Ausnehmung des Flansches 11 eingesetzt ist unter Zwischenschaltung einer Dichtung oder eines Dichtrings 37. Die Fensterplatte 18 wird mit Hilfe eines Flansches 22 gegen den Flansch 11 angepresst. Der Flansch 22 wird mit Hilfe von Schrauben 39 am Flansch 11 angeschraubt. Die Fensterplatte kann jedoch ebenfalls aus Kunststoff, etwa aus PEEK, sein, die mit einer Titanfolie beschichtet ist, um die oben erwähnten Vorteile zu erzielen.

In Fig. 6 weist die Verdickung 37 auf der in Produktionsrichtung 17 vorne liegenden Seite des Durchgangs 15 einen Abschnitt 50 auf, der weiter in das Druckrohr 10 ragt als die Fensterplatte 20. Sollte ein Kabel nach unten durchhängen, wird dadurch verhindert, dass es mit der Fensterplatte 20 in Berührung kommt. In Fig. 7 wird die Fensterplatte 20 zusätzlich von den Klammern 26, 28 geschützt.

Fig. 8 zeigt eine untere Fensteranordnung in der Position von Fig. 2 nach dem Stand der Technik mit einem Flanschkörper 34a, der in einer innen liegenden Ausnehmung eine Fensterplatte aus Beryllium aufnimmt, die über eine Dichtung 24a gegen Schulter und Durchgang 15a gepresst wird.

In Figur 10 ist die Fensterplatte 20 im Schnitt dargestellt. Sie besteht aus einer länglichen Scheibe 60 aus Kunststoff, insbesondere PEEK, die auf der Innenseite mit einer Titanfolie 62 beschichtet ist. Die Titanfolie 62 ist dem Innern des Druckrohrs zugekehrt, bewirkt daher eine Wärmeableitung sowie eine Reflexion der Wärmestrahlung, die durch das Schutzgas im Druckrohr bewirkt wird. Die blanke Oberfläche der Titanfolie 62 ermöglicht einen Selbstreinigungseffekt und lässt sich außerdem leicht reinigen. Eine Fensterplatte, wie in Figur 10 dargestellt, kann auch für die obere Fensteranordnung, wie sie in den Figuren 2 und 3 bzw. 9 dargestellt ist, verwendet werden.

In Figur 11 ist der hülsenförmige Abschnitt des Flanschkörpers 34 von einem der Ringkörper 64 umgeben, der in geeigneter Weise (nicht dargestellt) mit dem Druckrohr verbunden ist. Der Ringkörper 64 steht, wie in Figur 11 deutlich zu erkennen, etwas über die Fensterplatte 20 nach innen vor. Dadurch bietet sie einen Schutz gegen eine Kollision eines Kabels mit dem Fenster 20.

Der Ringkörper 64 ist mit einem Kühlkanal 66 versehen, durch den Wasser als Kühlmittel strömen kann.

## Patentansprüche

1. Fensteranordnung an einem Druckrohr (10), vorzugsweise zum Vulkanisieren oder Vernetzen von Umhüllungen von elektrischen Kabeln, mit einem Gehäuse im Zuge oder am Ende des Druckrohrs das auf diametral gegenüberliegenden Seiten Flansche (11, 12) mit radial gerichteten Durchgängen (14, 15) aufweist, deren Achsen zur Längsachse des Druckrohrs senkrecht stehen und in einer Messebene für eine Röntgenmessvorrichtung liegen, wobei dem einen Durchgang außen eine Röntgenquelle und dem anderen Durchgang ein auf Röntgenstrahlen empfindlicher Empfänger zugeordnet wird, und mit für Röntgenstrahlung durchlässigen oberen und unteren Fensterplatten, die dichtend im zugeordneten Durchgang (14, 15) angeordnet und mit Hilfe von Befestigungsmitteln (26, 28) im Durchgang befestigt sind und die aus einem Material bestehen, das gegen hohe Temperaturen und prozessgedingte Beätzungen durch chemisch aggressive Substanzen beständig ist, **dadurch gekennzeichnet, dass** die Anordnung zumindest der unteren Fensterplatte (20) und eine gezielte Temperierung der Fensterplatte (20) so ausgeführt sind, dass die Temperatur der Fensterplatte (20) unterhalb des Taupunkts der Gasatmosphäre im Druckrohr (10) liegt und das Kondensat ungehindert in das Druckrohr (10) abfließen kann.

2. Fensteranordnung nach Anspruch 1, **dadurch gekennzeichnet, dass** das Material der Fensterplatte (20) aus Titan, Keramik, Kunststoff, kohlefaserverstärktem Kunststoff, PEEK, oder aus einer Kombination dieser Materialien besteht.

3. Fensteranordnung nach Anspruch 1 oder 2, **dadurch gekennzeichnet, dass** die Fensterplatte (20) auf der drucklosen Seite gegen eine Ringdichtung (24) anliegt.

4. Fensteranordnung nach Anspruch 3, **dadurch gekennzeichnet, dass** die fensterplatte (20) unter Vorspannung an der Ringdichtung (24) anliegt.

5. Fensteranordnung nach einem der Ansprüche 1 bis 4, **dadurch gekennzeichnet, dass** die Fensterplatte (20) von zwei seitlichen Halterungen gehalten ist.

6. Fensteranordnung nach einem der Ansprüche 1 bis 4, **dadurch gekennzeichnet, dass** die Fensterplatte von einer unteren Halterung gehalten ist, die einen Flüssigkeitsdurchlass aufweist oder bildet.

7. Fensteranordnung nach Anspruch 5, **dadurch gekennzeichnet, dass** die seitlichen Halterungen von länglichen Klammern (26,28) gebildet sind, die ihrerseits durch die Seitenwände des Durchgangs (15) bzw. am Rohr (10) fixiert sind.

8. Fensteranordnung nach Anspruch 7, **dadurch gekennzeichnet, dass** U-förmige Klammern (26, 28) auf gegenüberliegenden Seiten angeordnet sind, deren einer Schenkel (29) die Fensterplatte (20) übergreift und deren anderer Schenkel (27) in eine druckrohrfeste Ausnehmung (33) eingreift.

9. Fensteranordnung nach Anspruch 8, **dadurch gekennzeichnet, dass** der die Fensterplatte (20) erfassende Teil der Klammer (26, 28) bzw. die Fensterplatte (20) gegenüber dem druckrohrseitigen Ende des Durchgangs nur geringfügig nach außen versetzt liegt.

10. Fensteranordnung nach Anspruch 7 oder 8, **dadurch gekennzeichnet, dass** die Fensterplatte (20) auf der Druckrohrseite Ausnehmungen aufweist, welche die betreffenden Schenkel (29) der Klammern (26, 28) aufnehmen.

11. Fensteranordnung nach einem der Ansprüche 5 bis 10, **dadurch gekennzeichnet, dass** der Durchgang in einer inneren Verdickung (37) des Druckrohrs (10) gebildet ist und ein Abschnitt (50) der Verdickung (37) nahe dem Durchgang (15) über die Fensterplatte (20) schützend nach innen übersteht.

12. Fensteranordnung nach einem der Ansprüche 1 bis 11, **dadurch gekennzeichnet, dass** im Durchgang (15) ein Flanschkörper (34) angeordnet ist, der außen am Druckrohr (10) befestigt ist und die Fensterplatte (20) an dem im Inneren liegenden Abschnitt des Flanschkörpers angeordnet und gehalten ist.

13. Fensteranordnung nach Anspruch 7 und 12, **dadurch gekennzeichnet, dass** die Fensterplatte gegen das freie Ende des Flanschkörpers (34) anliegt und die Klammern (26, 28) an der Außenseite des Flanschkörpers (34) festgelegt sind.

14. Fensteranordnung nach Anspruch 12, **dadurch gekennzeichnet, dass** im Durchgang ein länglicher Ringkörper (64) angeordnet ist, der den im Inneren liegenden Abschnitt (30a) des Flanschkörpers (34) umgibt.

15. Fensteranordnung nach den Ansprüchen 1 bis 14, **dadurch gekennzeichnet, dass** der Fensteranordnung mindestens ein Kühlkanal (66) zugeordnet ist für den Durchfluss eines Kühlmittels.

16. Fensteranordnung nach einem der Ansprüche 1 bis 15, **dadurch gekennzeichnet, dass** mindestens eine Fensterplatte aus Kunststoff auf der Innenseite mit einer Metallfolie beschichtet ist.

17. Fensteranordnung nach Anspruch 17, **dadurch gekennzeichnet, dass** eine Titanfolie (62) vorgesehen ist.

18. Fensteranordnung nach Anspruch 14 und 15, **dadurch gekennzeichnet, dass** im Ringkörper (64) ein Kühlkanal (66) vorgesehen ist.

## Claims

1. Window arrangement on a pressure pipe (10), preferably for vulcanising or crosslinking of sheathings of electric cables, with a casing in the course of or at the end of the pressure pipe, said casing comprising flanges (11, 12) on diametrically opposing sides having radially directed passages (14, 15), whose axes are standing perpendicular to the longitudinal axis of the pressure pipe and are located in a measurement plane for an X-ray measurement device, wherein an X-ray source being associated to the one passage on the outer side and a receiver sensitive to X-rays to the other passage, and with upper and lower window plates that are transmissive for X-rays which are sealingly arranged in the associated passage (14, 15) and are fixed in the passage with the aid of fastening means (26, 28) and which consist of a material which is resistant against high temperatures and process-related etchings by chemically aggressive substances, **characterized in that** the arrangement of at least the lower window plate (20) and a purposeful temperature control of the window plate (20) are realized such that the temperature of the window plate (20) is below the dew point of the gas atmosphere in the pressure pipe (10), and the condensate can drain off into the pressure pipe (10) without hindrance.

2. Window arrangement according to claim 1, **characterized in that** the material of the window plate (20) consists of titanium, ceramics, plastic material, carbon fibre reinforced plastics, PEEK or of a combination of these materials.

3. Window arrangement according to claim 1 or 2, **characterized in that** the window plate (20) bears against a ring seal (24) on the pressureless side.

4. Window arrangement according to claim 3, **characterized in that** the window plate (20) bears against the ring seal (24) under preload.

5. Window arrangement according to any one of claims 1 to 4, **characterized in that** the window plate (20) is held by two lateral holder elements.

6. Window arrangement according to any one of claims 1 to 4, **characterized in that** the window plate is held by a lower holder element which comprises a passage for liquid or forms the same.

7. Window arrangement according to claim 5, **characterized in that** the lateral holder elements are formed by longitudinal clamps (26, 28), which on their part arc fixed by the side walls of the passage (15) or on the pipe (10), respectively.

8. Window arrangement according to claim 7, **characterized in that** U-shaped clamps (26, 28) are arranged at opposing sides, whose one leg (29) laps over the window plate (20), and whose other leg engages into a recess (33) that is stationary with respect to the pressure pipe.

9. Window arrangement according to claim 8, **characterized in that** the part of the clamp (26, 28) seizing the window plate (20) or the window plate (20), respectively, is situated only slightly offset towards the outside with respect to the end of the passage at the side of the pressure pipe.

10. Window arrangement according to claim 7 or 8, **characterized in that** the window plate (20) comprises recesses at the pressure pipe side, which receive the corresponding legs (29) of the clamps (26, 28).

11. Window arrangement according to any one of claims 5 to 10, **characterized in that** the passage is formed in an interior thickening (37) of the pressure pipe (10), and a portion (50) of the thickening (37) near to the passage (15) protrudes over the window plate (20) towards the inside in a protecting manner.

12. Window arrangement according to any one of claims 1 to 11, **characterized in that** a flange body (34) is formed in the passage (15), which is fixed on the pressure pipe (10) at the outside, and the window plate (20) is arranged and held on the portion of the flange body located in the interior.

13. Window arrangement according to claim 7 and 12, **characterized in that** the window plate bears against the free end of the flange body (34) and the clamps (26, 28) are fixed on the outer side of the flange body (34).

14. Window arrangement according to claim 12, **characterized in that** a longitudinal ring body (64) is arranged in the passage, which surrounds that portion (30a) of the flange body (34) located in the interior.

15. Window arrangement according to any one of claims 1 to 14, **characterized in that** at least one cooling channel (66) for the flow of a cooling agent is associated to the window arrangement.

16. Window arrangement according to any one of claims 1 to 15, **characterized in that** at least one window plate made of plastics is coated with a metal foil on the inner side.

17. Window arrangement according to claim 16, **characterized in that** a titanium foil (62) is provided.

18. Window arrangement according to claim 14 and 15, **characterized in that** a cooling channel (66) is provided in the ring body (64).

## Revendications

1. Agencement de fenêtre sur un tube de pression (10), de préférence pour la vulcanisation ou la réticulation d'enveloppes de câbles électriques, avec un boîtier au fil ou à l'extrémité du tube de pression qui présente, sur des côtés diamétralement opposés, des brides (11, 12) avec des traversées (14, 15) dirigées radialement dont les axes sont perpendiculaires à l'axe longitudinal du tube de pression et sont situés dans un plan de mesure pour un dispositif de mesure aux rayons X, une source de rayons X étant affectée à une traversée extérieurement et un récepteur sensible aux rayons X étant affecté à l'autre traversée, et avec des plaques de fenêtre supérieures et inférieures transparentes aux rayons X qui sont disposées, de façon assurant l'étanchéité, dans la traversée (14, 15) affectée et sont fixées à l'aide de moyens de fixation (26, 28) dans la traversée et qui se composent d'un matériau qui est résistant aux températures élevées et aux attaques liées au process par des substances chimiquement agressives, **caractérisé en ce que** l'agencement d'au moins la plaque de fenêtre (20) inférieure et un équilibrage ciblé de température de la plaque de fenêtre (20) sont effectués de sorte que la température de la plaque de fenêtre (20) se situe au-dessous du point de rosée de l'atmosphère gazeuse dans le tube de pression (10), et de sorte que le condensat peut s'écouler librement dans le tube de pression (10).

2. Agencement de fenêtre selon la revendication 1, **caractérisé en ce que** le matériau de la plaque de fenêtre (20) est en titane, céramique, matière plastique, matière plastique renforcée de fibre de verre, PEEK ou une combinaison de ces matériaux.

3. Agencement de fenêtre selon la revendication 1 ou 2, **caractérisé en ce que** la plaque de fenêtre (20) est, sur le côté hors pression, adjacente à un joint d'étanchéité annulaire (24).

4. Agencement de fenêtre selon la revendication 3, **caractérisé en ce que** la plaque de fenêtre (20) est, en prétension, adjacente au joint d'étanchéité annulaire (24).

5. Agencement de fenêtre selon une des revendications 1 à 4, **caractérisé en ce que** la plaque de fenêtre (20) est retenue par deux éléments de retenue latéraux.

6. Agencement de fenêtre selon une des revendications 1 à 4, **caractérisé en ce que** la plaque de fenêtre est retenue par un élément de retenue inférieur qui présente ou forme un passage de liquide.

7. Agencement de fenêtre selon la revendication 5, **caractérisé en ce que** les éléments de retenue latéraux sont formés de crampons (26, 28) oblongs qui sont de leur côté fixés par les parois latérales de la traversée (15) ou sur le tube (10).

8. Agencement de fenêtre selon la revendication 7, **caractérisé en ce que** des crampons en U (26, 28) sont disposés sur des côtés opposés, dont une branche (29) recouvre la plaque de fenêtre (20) et dont l'autre branche (27) s'engage dans un creux (33) fixe par rapport au tube de pression.

9. Agencement de fenêtre selon la revendication 8, **caractérisé en ce que** la partie des crampons (26, 28) qui saisit la plaque de fenêtre (20) ou bien la plaque de fenêtre (20) ne repose que de façon légèrement décalée vers l'extérieur par rapport à l'extrémité côté tube de pression de la traversée.

10. Agencement de fenêtre selon la revendication 7 ou 8, **caractérisé en ce que** la plaque de fenêtre (20) présente sur le côté tube de pression des creux qui logent les branches (29) en question des crampons (26, 28).

11. Agencement de fenêtre selon une des revendications 5 à 10, **caractérisé en ce que** la traversée est formée dans un épaississement (37) intérieur du tube de pression, et **en ce qu'**un segment (50) de l'épaississement (37) fait saillie vers l'intérieur, de façon protectrice, par rapport à la plaque de fenêtre (20), près de la traversée (15).

12. Agencement de fenêtre selon une des revendications 1 à 11, **caractérisé en ce que**, dans la traversée (15), il est disposé un corps de bride (34) qui est fixé à l'extérieur sur le tube de pression (10), et **en ce que** la plaque de fenêtre (20) est disposée et retenue sur le segment du corps de bride situé à l'intérieur.

13. Agencement de fenêtre selon les revendications 7 et 12, **caractérisé en ce que** la plaque de fenêtre est adjacente à l'extrémité libre du corps de bride (34), et **en ce que** les crampons (26, 28) sont fixés sur le côté extérieur du corps de bride (34).

14. Agencement de fenêtre selon la revendication 12, **caractérisé en ce que**, dans la traversée, il est disposé un corps annulaire (64) oblong qui entoure le segment (30a) du corps de bride (34) qui est situé à l'intérieur.

15. Agencement de fenêtre selon les revendications 1 à 14, **caractérisé en ce qu'**au moins une gaine de refroidissement (66) est affectée à l'agencement de fenêtre pour l'écoulement d'un agent de refroidissement.

16. Agencement de fenêtre selon une des revendications 1 à 15, **caractérisé en ce qu'**au moins une plaque de fenêtre en matière plastique est revêtue d'une feuille métallique sur le côté intérieur.

17. Agencement de fenêtre selon la revendication 17, **caractérisé en** cc qu'il est prévu une feuille en titane (62).

18. Agencement de fenêtre selon les revendications 14 et 15, **caractérisé en ce qu'**une gaine de refroidissement (66) est prévue dans le corps annulaire (64).
